# EUROPÄISCHE PATENTSCHRIFT

(11) **EP 2 429 737 B1**
(45) Veröffentlichungstag und Bekanntmachung des Hinweises auf die Patenterteilung: **31.12.2014**
(21) Anmeldenummer: 10721982.6
(22) Anmeldetag: 12.05.2010
(51) Int. Cl.: B21D 53/28, B21K 1/30, B23P 15/14, F16D 23/02

(54) **VERFAHREN ZUR HERSTELLUNG EINES SYNCHRONRINGS**
METHOD FOR PRODUCING A SYNCHRONIZING RING
PROCÉDÉ DE FABRICATION D'UNE BAGUE DE SYNCHRONISATION

(30) Priorität: 12.05.2009 DE 102009020882
(43) Veröffentlichungstag der Anmeldung: 21.03.2012
(73) Patentinhaber: Hoerbiger Antriebstechnik Holding GmbH, 86956 Schongau (DE)
(72) Erfinder: FÜRGUTH, Werner, 87640 Biessenhofen / Altdorf (DE)
(74) Vertreter: Prinz & Partner mbB
(86) Internationale Anmeldenummer: PCT/EP2010/002936
(87) Internationale Veröffentlichungsnummer: WO 2010/130442

(56) Entgegenhaltungen:
- EP-A1- 0 393 011
- DE-A1- 3 032 787
- DE-A1- 19 713 304
- FR-A1- 2 596 121
- GB-A- 1 000 494
- JP-A- 11 159 540
- US-A- 3 034 383

## Beschreibung

Die Erfindung betrifft ein Verfahren zur Herstellung eines Synchronrings für synchronisierte Schaltgetriebe.

Insbesondere betrifft die Ereindung ein Verfahren zur Herstellung eines sogenannten Blockerrings oder Sperr-Synchronrings für ein Schaltgetriebe, dessen Sperrzähne temporär einen Eingriff der Schaltmuffe mit der Schaltverzahnung verhindern.

Synchronringe werden als Außensynchronringe, Innensynchronringe und Zwischenringe eingesetzt, wobei darüber hinaus auch zwischen Einfach-, Doppel- und Dreifachkonus-Systemen unterschieden wird. Die sogenannten Mehrfachkonus-Systeme werden oft zum Synchronisieren der niedrigen Gänge verwendet, da hier die Drehzahldifferenzen beim Synchronisieren größer sind als bei hohen Gängen und daher größere Reibkräfte beim Beschleunigen und Abbremsen der Zahnräder erforderlich sind. Bei einer Außensynchronisation weist der Synchronring eine konische äußere Mantel- und Reibfläche auf und bei einer Innensynchronisation eine konische innere Mantel- und Reibfläche.

Synchronringe werden zum Beispiel durch Umformen eines Blechs, durch Sintern oder Schmieden hergestellt. Die erzeugte konische Reibfläche wird in einem nachfolgenden Arbeitsschritt bearbeitet, insbesondere mit einem organischen oder karbonhaltigen Reibbelag beschichtet. Auch das Aufbringen einer metallischen Beschichtung mittels galvanischer oder thermischer Verfahren ist möglich.

Aus der EP 1 141 567 B1 ist ein spanlos gefertigter Synchronring bekannt, bei dem die Reibflächen mit, in Axialrichtung gesehen, schräg zur Axialrichtung verlaufenden Nuten versehen sind. Diese Nuten werden durch Rollieren oder durch Prägen des Bleches vor dem sogenannten Durchstellen des konusförmigen Ringes, das heißt dem Umformen, eingebracht.

Die EP 0 393 011 A1 zeigt ein Verfahren zur spanlosen Herstellung eines konusförmigen Reibringes mit gesintertem Reibbelag für Kupplungen. Hierbei wird der Reibring aus einem Blech ausgestanzt, mit einem aufgesinterten Reibbelag versehen und unter gleichzeitigem Einprägen von Rillen zu seiner endgültigen Form umgeformt.

Die den nächstkommenden Stand der Technik bildende US 3,034,383 beschreibt einen Synchronring sowie ein Verfahren und eine Maschine zu dessen Herstellung. Der Synchronring weist eine konische Reibfläche sowie axiale Rillen auf, die in einem Umformungsschritt durch axiales Verschieben eines Werkzeugs in den Synchronring eingebracht werden. Als Halbzeug zur Herstellung des Synchronrings dient dabei ein rohrförmiges Werkstück.

Aufgabe der Erfindung ist es, ein wirtschaftliches Herstellungsverfahren für einen Synchronring anzugeben, der sich durch eine hohe Qualität auszeichnet. Darüber hinaus soll eine Baugruppe mit einem Synchronring und einem Gegenkonusring angegeben werden, die sich ebenfalls durch geringe Herstellungskosten und hohe übertragbare Reibkräfte beim Synchronisieren auszeichnet.

Das erfindungsgemäße Verfahren sieht folgende Schritte vor:
a) Umformen eines Flachmaterials aus Metall, sodass wenigstens eine konische Reibfläche erzeugt wird, und
b) Einbringen von axialen Rillen in die Reibfläche durch axiales Verschieben eines Werkzeugs relativ zur Reibfläche unter Erzeugung der endgültigen Reibfläche und
c) nachfolgendes Härten des Synchronringes.

Das erfindungsgemäße Verfahren sieht ausdrücklich keine nachträgliche Beschichtung der Reibfläche vor. Die konische Reibfläche ist sozusagen nach dem Erzeugen der Rillen bereits abschließend hergestellt, sodass die Reibfläche durch das Material des Ringkörpers und nicht etwa durch eine Beschichtung gebildet ist. Indem die Rillen, in Axialrichtung gesehen, axial und nicht schräg zur Axialrichtung verlaufen, das heißt keine in Umfangsrichtung verlaufende Komponente haben, können sie wesentlich einfacher hergestellt werden, nämlich durch ein rein axiales Relativverschieben eines Werkzeugs zur konischen Reibfläche, die zu diesem Zeitpunkt noch ohne axiale Rillen ausgebildet ist. Das Herstellen der Rillen kann in mehreren nacheinander folgenden Schritten erfolgen.

Die Rillen werden insbesondere spanlos hergestellt, was vorzugsweise beim Umformen des Flachmaterials und beim Erzeugen der konischen Reibfläche durchgeführt wird.

Das Umformen erfolgt zum Beispiel durch mehrere hintereinander erfolgende Umformschritte, in denen die konische Reibfläche gebildet wird.

Die bevorzugte Ausführungsform sieht vor, dass die Rillen beim Tiefziehen des Flachmaterials eingebracht werden, indem ein entsprechend profiliertes Tiefziehwerkzeug, zum Beispiel im letzten oder den letzten Umformschritten verwendet wird. Dies ist insbesondere beim Herstellen eines Innenkonus einfach auszuführen, da hier ein entsprechender profilierter Tiefziehstempel verwendet werden könnte.

Ferner sollten, um keine zusätzlichen Verfahrensschritte wie Rollieren oder dergleichen zu benötigen, ausschließlich axial verlaufende Rillen vorgesehen sein, das heißt Rillen ohne Verlauf in Umfangsrichtung.

Der Synchronring wird nach dem Umformen gehärtet, wobei als Materialien nitrierbare Stähle bevorzugt verwendet werden. Ein Beispiel für das Flachmaterial sind C30- bis C35-Stähle sowie 16MnCr5.

Die Rillen müssen auch nicht gleichmäßig am Umfang verteilt werden, es kann durchaus vorteilhaft sein, sie auf dem Umfang ungleichmäßig zu verteilen.

Darüber hinaus ist ein abschließender Kalibrierschritt, der vor dem Härten am Ende des Umformverfahrens erfolgt, oft vorteilhaft.

Das Flachmaterial ist gemäß einer bevorzugten Ausführungsform ein unbeschichtetes Metall, sodass die Reibfläche ebenfalls unbeschichtet bleibt.

Darüber hinaus wäre es aber auch möglich, Flachmaterial in Form eines plattierten, insbesondere walzplattierten Blechs zu vernrenden, bei dem ebenfalls kein separater Reibbelag nach dem Erzeugen des Konus aufgebracht werden müsste. Beim plattierten Blech bietet es sich zum Beispiel an, als dünne Oberfläche Messing vorzusehen.

Eingangs wurde bereits erläutert, dass das erfindungsgemäße Verfahren insbesondere für einen Synchronring in Form eines sogenannten Blockerrings, auch Sperrring genannt, eingesetzt wird. Dieser weist durch Umformen hergestellte, radial abstehende Sperrzähne auf, die einstückiger Bestandteil des Synchronrings sind. Die Sperrzähne können bereits vor dem Umformen zum Beispiel durch Stanzen des Flachmaterials hergestellt werden, sodass anschließend auch im Bereich der Sperrzähne keine spanende Nachbearbeitung mehr erforderlich ist. Der erfindungsgemäß hergestellte Synchron-Blockerring besteht folglich nur aus einem Teil.

Das erfindungsgemäße Verfahren kann für die Herstellung von Einfachkonusringen, insbesondere mit Innenkonus, oder Doppelkonusringen verwendet werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Ansicht einer Ausführungsform des erfindungsgemäß hergestellten Synchronrings,
- Figur 2 den Synchronring nach Figur 1 in Schnittansicht,
- Figur 3 einen Ausschnitt eines synchronisierten Schaltgetriebes mit dem erfindungsgemäß hergestellten Synchronring und einer Baugruppe mit einem erfindungsgemäß hergestelltem Synchronring,
- Figur 4 ebenfalls einen Ausschnitt aus einem synchronisierten Schaltgetriebe, bei dem ein erfindungsgemäß hergestellter Synchronring und eine Baugruppe mit einem erfindungsgemäß hergestelltem Synchronring gemäß einer weiteren Ausführungsform eingesetzt werden, wobei hier ein Mehrfachkonus-System zur Anwendung kommt,
- Figur 5 eine Ansicht eines Flachmaterials aus Metall, aus dem ein Synchronring erfindungsgemäß umgeformt wird, und
- Figuren 6 und 7 aufeinanderfolgende Schritte beim Umformen des Flachmaterials zur erfindungsgemäßen Erzeugung des Synchronrings zur Erläuterung des erfindungsgemäßen Verfahrens.

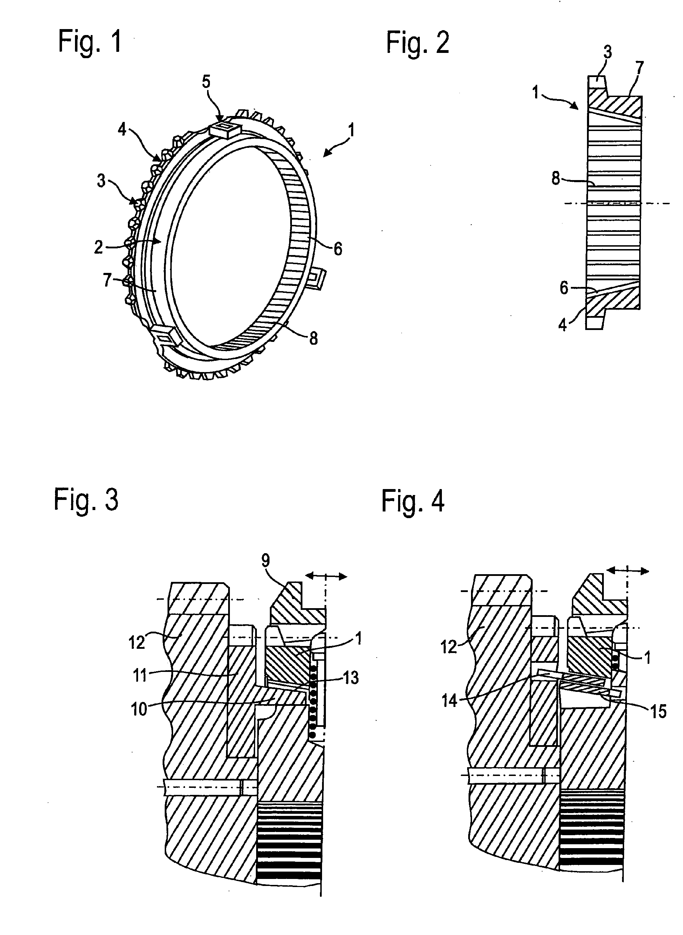

In Figur 1 ist ein Synchronring 1 in Form eines Blocker- oder Sperr-Synchronrings dargestellt.

Der Synchronring 1 weist einen Ringkörper 2 auf, von dem Sperrzähne 3 an einem axialen Ende 4 abstehen. Die Sperrzähne 3 sind Teil eines radial nach außen weisenden Bundes.

Dieser Bund kann auch mit sogenannten Index-Nocken 5 versehen sein, die als ursprünglich radial nach außen stehende Laschen axial um etwa 90° umgebogen werden. Diese Index-Nocken 5 liegen zwischen benachbarten Gruppen von Sperrzähnen 3.

Der Synchronring 1 ist ein sogenannter Einfachkonus-Synchronring mit einer konischen Reibfläche 6 auf der Innenseite des Ringkörpers 2. Ein solcher Synchronring 1 wird für eine sogenannte Innehsynchronisation eingesetzt.

Alternativ kann jedoch auch oder zusätzlich die radial äußere Mantelfläche 7 konisch ausgeführt sein und eine Reibfläche bilden, sodass ein sogenanntes Doppelkonus-System vorhanden ist. Beim Doppelkonus-System entfallen die Sperrzähne 3.

Die konische Reibfläche 6 ist auf ihrem Umfang mit zahlreichen, sehr eng aufeinanderfolgenden axialen Rillen 8 versehen, deren Breite im Wesentlichen gleich groß oder sogar größer als der Abstand zwischen benachbarten Rillen 8 ist. In den Figuren 1 und 2 sind die Abstände benachbarten Rillen 8 größer als es bei der bevorzugten Ausführungsform der Fall ist, dargestellt, um die Übersichtlichkeit zu wahren.

Die Rillen 8 verlaufen ausschließlich in axialer, und zwar in rein axialer Richtung, das heißt mit Blick in Axialrichtung ist kein Verlauf in Umfangsrichtung vorhanden.

Die konische Reibfläche 6 besteht gemäß der bevorzugten Ausführungsform aus dem Material, aus dem der gesamte Synchronring 1 besteht und ist ohne eine daran aufgebrachte Reibschicht ausgeführt.

Das bedeutet, die Reibfläche 6 wird durch das Flachmaterial, aus dem der gesamte Synchronring 1 hergestellt ist, gebildet. Die Rillen 8 verhindern im Betrieb ein Verschweißen mit einem Gegenkonusring und stellen einen Aufnahmeraum für Öl dar.

In Figur 3 ist das Synchronisierungssystem eines Schaltgetriebes dargestellt, das als Einfachkonus-System ausgeführt ist. Der erfindungsgemäß hergestellte Synchronring 1 drückt dabei durch Bewegung einer axial verschieblichen Schaltmuffe 9 gegen einen Gegenkonusring 10, der Teil eines Kupplungskörpers 11 oder unmittelbar eines Gangrades 12 ist. Der Gegenkonusring 10 hat eine konische Gegenreibfläche 13, die bei der Synchronisation mit der Reibfläche 6 in Kontakt kommt.

Dasjenige Teil, welches den Gegenkonusring 10 trägt, bildet zusammen mit dem Synchronring 1 eine Baugruppe. Das Besondere an dieser Baugruppe besteht darin, dass die beiden Reibflächen 6, 13 ohne eine nachträglich aufgebrachte Reibschicht ausgeführt sind, sogar vorzugsweise ohne Reibschicht überhaupt.

Gemäß der bevorzugten Ausführungsform ist die Gegenreibfläche 13 rillenlos und damit glatt ausgeführt.

Im Gegensatz zum Stand der Technik ist bei dieser Baugruppe kein zusätzlicher Reibbelag, zum Beispiel organischer, karbonhaltiger oder zusätzlicher metallischer Reibbelag vorhanden. Dies reduziert die Herstellungskosten für die Baugruppe erheblich.

Das in Figur 4 gezeigte Mehrfachkonus-System umfasst neben dem Synchronring 1 einen konischen Zwischenring 14, der den Gegenkonus bildet und drehfest mit dem Gangrad 12 direkt oder indirekt gekoppelt ist. Ein weiterer Synchronring 15 wiederum ist auf der radialen Innenseite des Zwischenrings 14 angeordnet, sodass zum Synchronisieren der Zwischenring 14 radial auf beiden Seiten kontaktiert wird. Die Baugruppe besteht aus einem oder beiden antriebsseitigen Synchronringen 1, 15 und dem Zwischenring 14. Auch bei dieser Ausführungsform sind eine oder beide einander berührenden Paarungen von Reibflächen ohne Reibschicht, auf jeden Fall ohne nachträglich aufgebrachte Reibschicht ausgeführt.

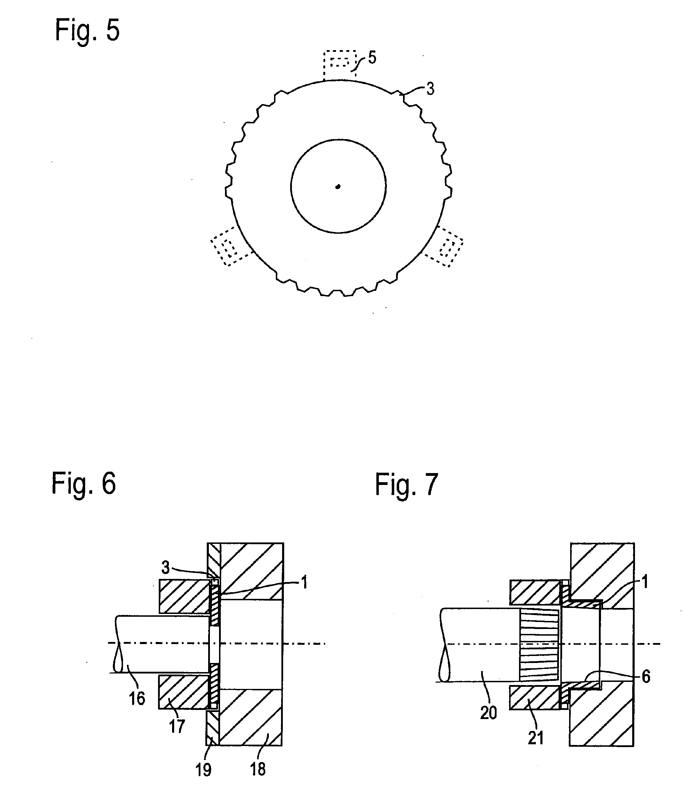

Die Herstellung des Synchronrings 1 wird im Folgenden anhand der Figuren 5 bis 7 erläutert.

Der Synchronring 1 wird aus einem Flachmaterial aus Metall hergestellt, das in Figur 5 dargestellt ist und welches zum Beispiel durch Stanzen außen- und innenseitig bearbeitet ist. Da nach dem Stanzen vorzugsweise keine spanende Nachbearbeitung mehr stattfindet, sind auch die Sperrzähne 3 bereits in dem Flachmaterial aus Metall ausgeformt. Optional, falls vorhanden, können natürlich auch die Index-Nocken 5 mit ausgestanzt sein.

Der Synchronring 1 wird anschließend in mehreren Schritten zu seiner endgültigen, in Figur 1 dargestellten Geometrie plastisch umgeformt, vorzugsweise durch Tiefziehen.

Der erste Tiefziehschritt ist sehr schematisch in Figur 6 dargestellt, bei dem ein Tiefziehwerkzeug mit einem Ziehstempel 16, einem Niederhalter 17 und einer Ziehmatrize 18 ausgeführt ist. Die Aufnahme 19 kann auch Teil der Ziehmatrize 18 sein. Nach mehreren Umformvorgängen wird schließlich ein Werkzeug, hier ein besonderer Ziehstempel 20, verwendet, der ein konisches Ende mit Rippen und Rillen 21 hat. Durch axiales Relativverschieben des Werkzeugs 20 zum fast fertigen Synchronring 1 werden in die Reibfläche 6 die Rillen 8 eingeformt, vorzugsweise spanlos hergestellt. Die Rillen 8 können natürlich auch in mehreren Umformschritten erzeugt werden.

Nachdem der Synchronring 1 seine endgültige Form erhalten hat, wird er gehärtet, zumindest im Bereich der Sperrzähne 3 und der Reibfläche 6.

Entsprechend könnte natürlich auch eine konische Außenfläche eines Synchronrings mit Rillen versehen werden, um eine entsprechende Reibfläche zu bilden.

Als Flachmaterial wird insbesondere 16MnCr5 oder C30- bis C35-Stahl eingesetzt, wobei der Stahl vorzugsweise nitrierbar sein sollte.

Das Herstellen der Rillen 6 erfolgt, wie erläutert, vorzugsweise beim Tiefziehen selbst.

Eine spanende Nachbearbeitung nach dem Herstellen der Rillen und nach dem Härten erfolgt im Übrigen nicht.

Zu betonen ist, dass auch der Zwischenring 14 oder der Konusring 15 gemäß Figur 4 als gemäß der Erfindung hergestellter Synchronring anzusehen wären und entsprechend hergestellt werden könnten.

Alternativ zu einem unbeschichteten Flachmaterial kann auch ein plattiertes, insbesondere walzplattiertes Blech verwendet werden. Dieses Blech hätte dann an seiner Reibfläche von vorneherein eine gewisse Beschichtung, die dann auch die Reibfläche bilden würde. Auch bei dieser Ausführungsform wäre aber keine nachträgliche Aufbringung einer Reibschicht vorgesehen.

## Patentansprüche

1. Verfahren zur Herstellung eines Synchronrings (1) für synchronisierte Schaltgetriebe, **gekennzeichnet durch** folgende Verfahrensschritte:
a) Umformen eines Flachmaterials aus Metall, so dass wenigstens eine konische Reibfläche (6) erzeugt wird,
b) Einbringen von axialen Rillen (8) in die Reibfläche (6) **durch** axiales Verschieben eines Werkzeugs relativ zur Reibfläche (6) unter Erzeugung der endgültigen Reibfläche (6), und
c) nachfolgendes Härten des Synchronrings (1).

2. Verfahren nach Anspruch 1, **dadurch gekennzeichnet, dass** mehrere Umformschritte hintereinander durchgeführt werden, in denen das Flachmaterial zur Bildung der konischen Reibfläche (6) umgeformt wird.

3. Verfahren nach Anspruch 1 oder 2, **dadurch gekennzeichnet, dass** die Rillen (8) durch Verwendung eines entsprechend profilierten Tiefziehwerkzeuges beim Tiefziehen in die Reibfläche (6) eingebracht werden.

4. Verfahren nach einem der vorhergehenden Ansprüche, **dadurch gekennzeichnet, dass** die Rillen (8) spanlos hergestellt werden und dass vorzugsweise sämtliche Rillen (8) in Axialrichtung gesehen ausschließlich axial verlaufen.

5. Verfahren nach einem der vorhergehenden Ansprüche, **dadurch gekennzeichnet, dass** das Flachmaterial ein unbeschichtetes Metall und die Reibfläche (6) unbeschichtet ist.

6. Verfahren nach einem der Ansprüche 1 bis 4, **dadurch gekennzeichnet, dass** das Flachmaterial ein plattiertes, insbesondere walzplattiertes Blech ist.

7. Verfahren nach einem der vorhergehenden Ansprüche, **dadurch gekennzeichnet, dass** der Synchronring (1) ein Blockerring ist und durch Umformen hergestellte, radial abstehende Sperrzähne (3) aufweist.

8. Verfahren nach einem der vorhergehenden Ansprüche, **dadurch gekennzeichnet, dass** der Synchronring (1) ein Einfachkonusring, insbesondere mit Innenkonus, oder ein Doppelkonusring ist.

## Claims

1. A method of manufacturing a synchronizer ring (1) for synchronized manual transmissions, **characterized by** the following method steps:
(a) reshaping a flat material of metal, so that at least one conical friction surface (6) is produced;
(b) applying axial grooves (8) into the friction surface (6) by axially displacing a tool relative to the friction surface (6) to produce the final friction surface (6); and
(c) subsequent hardening of the synchronizer ring (1).

2. The method according to claim 1, **characterized in that** a plurality of reshaping steps are carried out in succession, in which the flat material is reshaped to form the conical friction surface (6).

3. The method according to claim 1 or 2, **characterized in that** the grooves (8) are applied into the friction surface (6) during deep-drawing by using an appropriately profiled deep-drawing die.

4. The method according to any of the preceding claims, **characterized in that** the grooves (8) are produced in a non-cutting process and that preferably all grooves (8), as viewed in the axial direction, run exclusively axially.

5. The method according to any of the preceding claims, **characterized in that** the flat material is an uncoated metal and the friction surface (6) is uncoated.

6. The method according to any of claims 1 to 4, **characterized in that** the flat material is a plated, in particular a roll-bonded, metal plate.

7. The method according to any of the preceding claims, **characterized in that** the synchronizer ring (1) is a blocker ring and includes radially projecting locking teeth (3) produced by reshaping.

8. The method according to any of the preceding claims, **characterized in that** the synchronizer ring (1) is a single-cone ring, in particular having an inner cone, or a double-cone ring.

## Revendications

1. Procédé de fabrication d'une bague de synchronisation (1) pour des boîtes de vitesses synchronisées, **caractérisé par** les étapes de procédé suivantes :
a) façonnage d'un matériau plat en métal de sorte qu'au moins une surface de friction conique (6) soit produite,
b) réalisation de rainures axiales (8) dans la surface de friction (6) par déplacement axial d'un outil par rapport à la surface de friction (6) en produisant la surface de friction (6) finale, et
c) durcissement subséquent de la bague de synchronisation (1).

2. Procédé selon la revendication 1, **caractérisé en ce que** plusieurs étapes de façonnage sont exécutées les unes après les autres, dans lesquelles le matériau plat est façonné de manière à former la surface de friction conique (6).

3. Procédé selon la revendication 1 ou 2, **caractérisé en ce que** les rainures (8) sont réalisées dans la surface de friction (6) lors de l'emboutissage en utilisant un outil d'emboutissage profilé de manière appropriée.

4. Procédé selon l'une des revendications précédentes, **caractérisé en ce que** les rainures (8) sont réalisées sans enlèvement de copeaux et **en ce que** de préférence toutes les rainures (8), vues dans le sens axial, s'étendent exclusivement de manière axiale.

5. Procédé selon l'une des revendications précédentes, **caractérisé en ce que** le matériau plat est un métal non revêtu et la surface de friction (6) n'est pas revêtue.

6. Procédé selon l'une des revendications 1 à 4, **caractérisé en ce que** le matériau plat est une tôle plaquée, en particulier une tôle plaquée par laminage.

7. Procédé selon l'une des revendications précédentes, **caractérisé en ce que** la bague de synchronisation (1) est une bague de blocage et présente des dents d'arrêt (3) radialement en saillie et fabriquées par façonnage.

8. Procédé selon l'une des revendications précédentes, **caractérisé en ce que** la bague de synchronisation (1) est une bague à cône simple, en particulier avec un cône intérieur, ou une bague biconique.
